# EUROPEAN PATENT APPLICATION

(11) **EP 2 960 811 A1**
(43) Date of publication of application: **30.12.2015**
(21) Application number: 14306009.3
(22) Date of filing: 26.06.2014
(51) Int. Cl.: G06F 17/30, G06K 9/00

(54) **Method and device for analyzing a database comprising a large number of video images**

(71) Applicant: Thomson Licensing, 92130 Issy-les-Moulineaux (FR)
(72) Inventor: Sharma, Gaurav, 35576 CESSON SEVIGNE CEDEX (FR); Perez, Patrick, 35576 CESSON SEVIGNE CEDEX (FR)
(74) Representative: Huchet, Anne

(57) **Abstract**

The present disclosure relates to a method for analyzing a database comprising a plurality of video images, characterized in that the method comprises the steps of:
- sampling (S1) each video image of at least a part of the plurality of video images of the database in order to get a plurality of image patches for said video image, each image patch being a portion of said video image;
- filtering (S2) said plurality of image patches based on at least one predetermined criterion in order to remove image patches having redundant visual content and to keep a limited group of visually non-similar image patches and/or visually non-similar image patches representative of said plurality of image patches ; and
- clustering (S2) image patches of said limited group of image patches into a plurality of clusters according to a visual similarity criterion, each cluster including image patches including visually and/or semantically similar visual motifs.

## Description

### Technical field

The present disclosure relates to the domain of data mining in database comprising videos and can be used for video summarization, indexing and browsing. More specifically, the present disclosure relates to a method and a device for analyzing a database comprising a large number of videos.

### Technical background

With the increasing popularity of affordable imaging devices e.g. digital cameras and video recorders, digital visual data, like images and videos, is growing at a very high rate. Tools for analyzing and extracting information from very big databases of images and videos are critical for future technologies. These tools are used for different applications like video summarization, video indexing or video browsing.

Many previous works have addressed the issue of video summarization. While some have addressed low level visual cues for extracting information, some others have exploited both audio and video. Systems and methods have also been proposed to use higher level knowledge e.g. known celebrities and even sources (like the internet) other than only the present video (collection). Video indexing based on both low level features and high level objects is an active topic of research and system development. Similarly browsing video collections based on objects of interest has also been explored.

A common point of all these existing systems is that they all work at global frame level or assume the existence/definition of objects of interests.

### Summary

One purpose of the present disclosure is to provide an alternative to such methods.

Another purpose of the present disclosure is to provide an efficient processing of large video databases e.g. archives of movies, TV shows, documentaries, for the related tasks of summarization of the visual content, indexing of and retrieval in the database and efficient browsing of visual content in the database.

According to the present disclosure, it is proposed to work on patches or pieces of images and to mine out the interesting visual content of the video database based on said image patches.

The present disclosure relates to a method for analyzing a database comprising a plurality of video images, also called video frames, the method comprising:
- sampling each video image of at least a part of the plurality of video images of the database in order to get a plurality of image patches for the video image, each image patch being a portion of the video image;
- filtering the image patches, based on at least one predetermined criterion, in order to remove image patches having redundant visual content and to keep a limited group of visually non-similar image patches and/or visually non-similar image patches representative of the plurality of image patches; and
- clustering image patches of the limited group of image patches into a plurality of clusters according to a visual similarity criterion, each cluster including image patches including visually and/or semantically similar visual motifs.

In a specific embodiment, the plurality of video images belong to a plurality of video streams.

In a variant, the plurality of video images belong to one video stream having a plurality of video shots.

In a specific embodiment, each video image is sampled randomly.

Advantageously, the plurality of images are sampled in such a way that each pixel of each video image is included in at least one image patch of the plurality of image patches.

In a specific embodiment, the size of the image patches varies randomly.

In a specific embodiment, the width and/or the height of image patches depends on the image resolution. The smallest patch can be only a few pixels while the larger patch could be almost the full image.

In another embodiment, the size of the image patches varies according to their position in the video image.

In a specific embodiment, in the filtering step, the image patches are also filtered according to at least one predetermined additional criterion in order to keep (i) the image patches which have non-uniform color or gray intensity and/or (ii) the image patches comprising at least one object and/or (iii) the image patches comprising one object or a group of visually or semantically similar objects.

In a specific embodiment, the clustering is unsupervised.

In another embodiment, the clustering is semi-supervised.

In another embodiment, the clustering is fully supervised.

In a summarization application, the method further comprises a step of selecting at least one image patch in each cluster of the plurality of clusters and a step of displaying the selected image patches.

In an indexation application, the method further comprises a step of creating an index for each cluster, the index pointing back in the database to at least one video image comprising an image patch of the cluster.

In a browsing application, the method further comprises associating links between at least two clusters within the plurality of clusters by defining a visual similarity between different the clusters and/or a visual similarity between the centroids of the clusters.

The present disclosure concerns also a device configured to analyze a database comprising a plurality of video images, characterized in that the device comprises at least one processor configured for:
- sampling each video image of at least a part of the plurality of video images of the database in order to get a plurality of image patches for the video image, each image patch being a portion of the video image;
- filtering the image patches based on at least one predetermined criterion in order to remove image patches having redundant visual content and to keep a limited group of visually non-similar image patches and/or visually non-similar image patches representative of the plurality of image patches; and
- clustering image patches of the limited group of image patches into a plurality of clusters according to a visual similarity criterion, each cluster including image patches including visually and/or semantically similar visual motifs.

In a specific embodiment, the processor is further configured for creating an index for each cluster, the index pointing back in the database to at least one video image comprising an image patch of the cluster.

In a specific embodiment, the processor is further configured for associating a link between two clusters within the plurality of clusters by defining a visual similarity between different the clusters and/or a visual similarity between the centroids of the clusters.

The present disclosure also relates to a computer program product comprising instructions of program code for executing steps of the above-mentioned method, when the program is executed on a computer.

### List of figures

The present disclosure will be better understood, and other specific features and advantages will emerge upon reading the following description, the description making reference to the annexed drawings wherein:
- Fig.1 shows a flow chart of the basic steps of the method according to the present disclosure;
- Fig.2 shows results of the method of the present disclosure applied to a video collection;
- Fig.3 a block diagram of the method according to the present disclosure; and
- Fig.4 shows an example of device implementing the method of the present disclosure.

### Detailed description of embodiments

The present disclosure will be described in reference to a particular embodiment of a method of processing a large video collection (or video database) comprising a large number of video content like movies, TV shows, documentaries. Of course, the video collection may comprise any kind of video images. The terms "image" or "frame" will be used interchangeable in the present description.

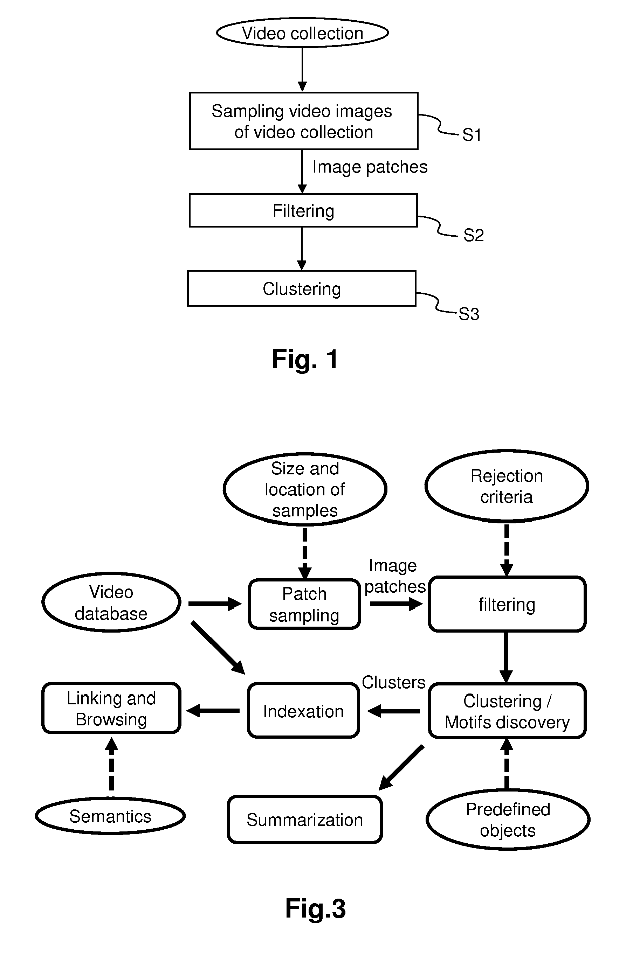

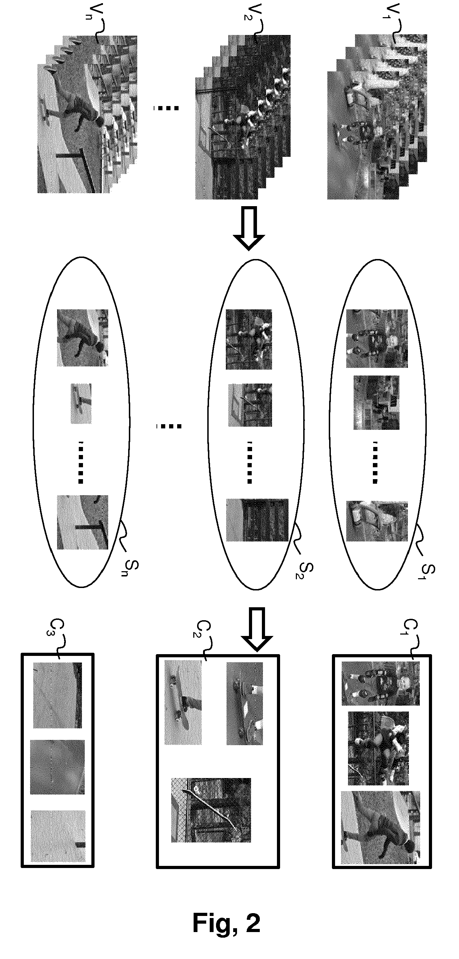

**Fig.1** shows a basic flow chart of the steps of the method according to a non limitative embodiment of the present disclosure, **Fig.2** shows the results of these steps applied to a given video collection and **Fig.3** is a block diagram of the method according to a specific embodiment of the present disclosure with additional and optional steps for summarization, indexation and browsing.

According to a first step S1, each video image of a video collection is sampled in order to get a plurality of image patches for said video image, each image patch being a portion of said video image. The function of this step is to generate a large number of candidate patches, each candidate patch being likely to include interesting visual motifs which can help for summarization and/or indexation of the video collection. According to the present disclosure, it is considered that the visual entities of interest of a video database are the visual motifs which appear frequently in the database. The definition of interesting visual motifs here is quite generic i.e. these visual motifs of interest could be objects in the traditional sense e.g. cars, trees, people, or they could be scenes like beach, forest, or they could even be parts like human faces, car wheels or windows etc.

In figure 2, the video collection comprises a plurality of video streams Vᵢ with *i* ∈ [1..*n*] and these video streams Vᵢ are sampled in order to get a set Sᵢ of image samples for each video stream Vi.

In this example, the video streams Vi show people skateboarding in a public place. The visual motifs of interest or recurring motifs in these videos may be, but not limited to, persons, skateboards or skate rings.

As mentioned before, the purpose of the step S1 is to generate image patches which might contain interesting visual motifs which will help in summarization and indexation of the video database. The idea is to generate an over-complete set of image patches comprising all possible motif candidates. That is a reason why a large number of patches is advantageously generated at many different scales or sizes and at many locations inside the video images.

The number and the size of samples generated for each video stream Vi of the video collection may vary. They may vary randomly or depend on the size and the number of video images of the video stream. In large format, the width and/or the height of image patches depends on the image resolution. The smallest patch can be only a few pixels while the larger patch could be almost the full image.

Advantageously, the images of the video streams are sampled in such a way that each pixel of each video image is included in at least one image patch.

If the user knows about the type of visual motifs which might be interesting, the present disclosure allows for specification of parameters on the location and scale/size of such motifs i.e. prior information on the occurrence of interesting visual motifs. For example, if the user is interested in faces of persons and the videos are talk shows, the user might specify that the interesting patches occur generally in the center of the images and usually around 60 pixels square. In this case, it will be required to generate more patches of sizes around 60 pixels square in the central locations in the images. In this specific embodiment, the size of the image patches varies according to their position in the video image.

The sampling step S1 generates potentially millions of image patches of different sizes which make the process very expensive. So, according to the present disclosure, the step S1 is followed by a step S2 for filtering these image patches based on a determined criterion in order to remove image patches having redundant visual content and to keep only a limited group of non visually similar image patches and/or a restricted group of non visually similar of image patches representative of the plurality of image patches generated by S1.

The purpose of the step S2 is to remove redundant image patches because the oversampling of the video images of step S1 generates a big number of image patches some of which are redundant in the sense that they contain the same visual data.

To remove redundant patches, the method of the present disclosure uses for example an approximate nearest neighbor algorithm to find similar image patches in terms of distance between the patches. The said distance between the patches could be based on pixelwise gray level comparison of intensity normalized patches or based on some standard feature detector and descriptor like SIFT (Scale Invariant Feature Transform) and/or HOG (Histogram of Oriented Gradients). Only one single image patch is kept for a set of visually similar image patches. This single patch can be a patch from the set of similar image patches or a synthetic patch issued from a group of image patches. This patch is for example the mean or medoid patch of the set of similar image patches.

Advantageously, this step S2 is also used to remove non interesting image patches according to other determined criteria. To remove the non interesting image patches, the method enters additional criteria like color non-uniformity, presence of at least one object in the patch, sum of edge magnitude for all pixels in the patch above a threshold, in order to keep only the image patches having a non-uniform color/intensity and/or the image patches comprising at least one object or a group of similar objects. In the latter case, an object detection algorithm is applied to the image patches during the filtering step.

After redundant and non interesting image patch removal, the inventive method comprises a step S3 of clustering the remaining image patches into a plurality of clusters, each cluster including image patches having similar appearance and/or belonging to the same semantic field (like face, car, window etc.). Each cluster corresponds to a given category of recurring visual motifs and includes patch images including visually and/or semantically similar visual motifs.

The purpose of the step S3 is to perform an automatic discovery of recurring visual motifs and to generate clusters each including image patches having the same visual and/or semantic content. For example, in the case of figure 2, all the image patches issued from the step S2 containing a person are clustered in a cluster C1, all the image patches containing a skateboard are clustered in a cluster C2 and all the remaining image patches including a skate ring are clustered in a cluster C3.

The clustering step can be done in three modes. First, in a fully unsupervised mode, no annotation of any kind is provided to the process. The clustering step S3 is made based on the distances, in appropriate feature space, between the image patches using unsupervised learning algorithms like for example a k-means method, Gaussian Mixture Models (GMM), Latent Semantic Analysis (LSA).

In a second mode, called semi-supervised mode, a small number of annotated examples of a few interesting visual motif categories, like people or cars, is provided. These examples are used by semi supervised learning algorithm like distance metric learning algorithm with side information to find the occurrences of such categories along with other recurring motifs.

In a third mode, called supervised mode, the method is provided with predetermined information for some interesting visual motif categories. It may be provided with discriminative classifiers predicting if a given example patch belongs to the category or not or it may be provided with a learnt metric for computing the distance or closeness of two examples patches in the semantic visual sense. In this mode, like the second mode, the inventive method incorporates this information and performs transfer learning to get the final output.

At the end of step S3, a plurality of clusters Cj of image patches have been generated.

As illustrated by fig.3, these clusters may be used for summarization, index creation or browsing.

For summarization, the inventive method comprises the additional steps:
- selecting at least one image patch in each cluster of the plurality of clusters;
- displaying the selected image patches.

The summarization consists in presenting selected image patches, corresponding to the discovered visual motifs, which are representative of the visual content of the collection. If the collection is about skateboarding, the summarization may display image patches of people, skateboards, and cemented skating rings which were automatically discovered by the method.

For index creation, the method further comprises creating an index for each cluster, said index pointing back in the video collection to at least one video image comprising a image patch of said cluster. The index points back advantageously to all images of the video collection including an image patch of the cluster.

For browsing, the method proposes to link together the visual motifs, exploiting either user provided or automatically learnt (using potentially other sources for extra information, textual or visual, like the internet) semantics or by gathering user feedback on the semantic relations between discovered visual motifs. For example, the method might request the use to mark similar patches to a given patch, and upon getting the user feedback it would learn to associate more similar patches automatically by analysing the content of the patches marked by the user.

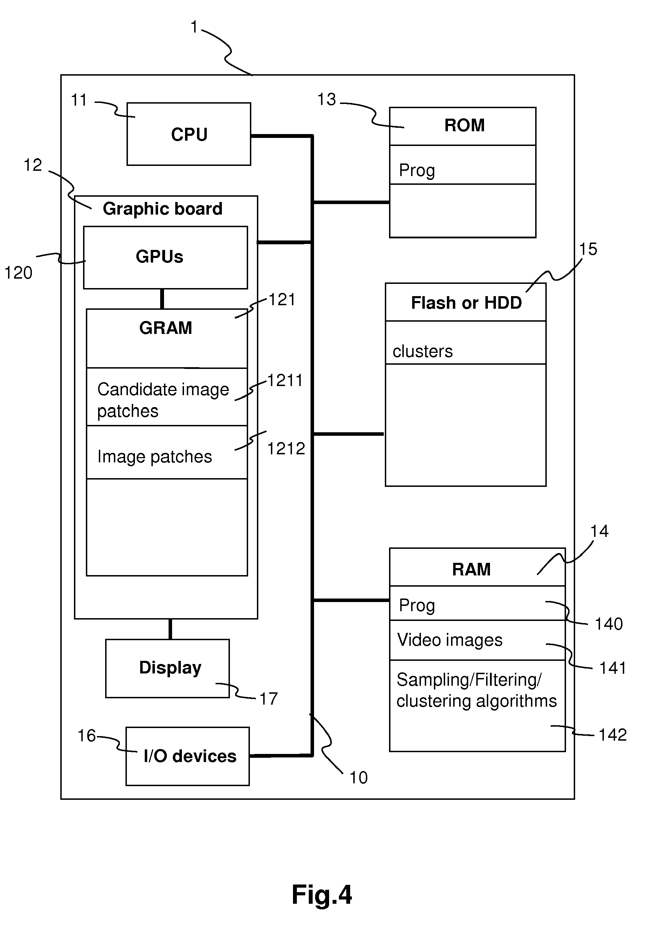

**Fig.4** schematically illustrates an example of a hardware embodiment of a device 1 arranged for implementing the method of the present disclosure. The device 1 comprises the following elements, interconnected by an address and data bus 10:
- a microprocessor 11 (or CPU) ;
- a graphics card 12 including:
   - a plurality of graphics processors 120 (or GPUs) ;
   - a Graphical Random Access Memory (or GRAM) 121;
- a Read Only Memory (ROM) 13;
- a Random Access Memory (RAM) 14;
- a Flash memory or a Hard Disk Drive 15; and
- Input/Output devices (I/O) 16, such as for example a keyboard or a mouse.

The device 1 also includes a display device 17 connected directly to the graphics card 12 for displaying the video collection and/or the images patches of the cluster and the results of the inventive method. Alternatively, the display device 17 is external to the device 1.

It is observed that the word "register" used in the description of the memories 121, 13, 14 and 15 designates, in each of these memories, an area of low capacity memory (some binary data) as wall as a large memory area (for storing an entire program or all or part of the data representative of data calculated or displayed).

At power up, the microprocessor 11 loads a program and different parameters into the RAM 14 and executes instructions of the program. The RAM 14 notably includes:
- in a register 140, the program of the microprocessor 11 loaded at the power-up of the device;
- in a register 141, the images of the video collection; and
- in a register 142, algorithms related to the sampling, filtering and clustering steps.

At power-up and once all needed information are loaded into the RAM 14, the graphics processors 120 load these information in GRAM 121 and execute the instructions of the algorithms related to the sampling, filtering and clustering operations. Intermediary results like candidate patch images or patch images (registers 1211 and 1212) and final results like clusters are stored in the GRAM, or if the space memory is not sufficient, in the flash memory or HDD 16.

Naturally, the present disclosure is not limited to the embodiments previously described. The implementations described herein may be implemented in, for example, a method or a process, an apparatus or a software program. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data archiving, data summarization, data indexation and browsing.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

The present disclosure has the following advantages.
(i) The method is capable of discovering recurring visual motifs automatically from large collection of videos;
(ii) The method does not assume knowledge of objects of interest in the video collection; it assumes only that the visual motifs which reoccur often in the video collection are interesting; at the same time, it is capable of incorporating prior knowledge of potentially interesting objects.
(iii) The method does not require expensive and subjective annotations, in general, but is capable of using annotations if available.
(iv) The method can also incorporate prebuilt systems e.g. discriminative object classifiers and learnt metrics for comparing patches.

The applications of the present disclosure are numerous and are for example the following ones:
(i) The method can be used to browse and search in archival contents; after the video collection has been processed by the method, the user would be capable of searching and browsing the collection e.g. look for objects like cars or people, which recur in the collection and hence were automatically discovered by the system.
(ii) The method can be used to design recommender systems; given the collection of preferred films for a user, the method could be used to discover the recurring motifs which are expected to be highly correlated to the genre/theme of the films e.g. medieval fantasy movies would have castles, horses, knights etc. recurring; in addition, such recurring motifs could be analyzed or automatically indexed by the system in larger film collection, which would give recommendations of similar type of movies to the user.
(iii) The system may also be used for example based search in large video collections. E.g. a user provides an image or a video clip as a query and the system returns the list of occurrences of visually closest motifs in the video collection.
(iv) The mined visual motifs could be interpreted as visual 'attributes' and may be further utilized to design a system for categorizing images, video shots or even complete videos into user interested categories.

## Claims

1. Method of analyzing a database comprising a plurality of video images, **characterized in that** the method comprises:
- sampling (S1) each video image of at least a part of the plurality of video images of the database in order to get a plurality of image patches for said video image, each image patch being a portion of said video image;
- filtering (S2) said plurality of image patches based on at least one determined criterion in order to remove image patches having redundant visual content and to keep a limited group of visually non-similar image patches and/or visually non-similar image patches representative of said plurality of image patches ; and
- clustering (S2) image patches of said limited group of image patches into a plurality of clusters according to a visual similarity criterion, each cluster including image patches including visually and/or semantically similar visual motifs.

2. Method according claim 1, wherein the plurality of video images belong to a plurality of video streams.

3. Method according to claim 1 or 2, wherein each video image is sampled randomly.

4. Method according to any one of claims 1 to 3, wherein said plurality of images are sampled in such a way that each pixel of each video image is included in at least one image patch of said plurality of image patches.

5. Method according to any one of claims 1 to 4, wherein the size of the image patches varies randomly.

6. Method according to any one of claims 1 to 4, wherein the size of the image patches depends on the image resolution.

7. Method according to any one of claims 1 to 4, wherein the size of the image patches varies according to their position in the video image.

8. Method according to any one of claims 1 to 7, wherein, in the filtering step, the image patches are also filtered according to at least one predetermined additional criterion in order to keep (i) the image patches which have non-uniform color or gray intensity and/or (ii) the image patches comprising at least one object and/or (iii) the image patches comprising one object or a group of visually or semantically similar objects.

9. Method according to any one of claims 1 to 7, wherein the clustering is unsupervised or semi-supervised or fully supervised.

10. Method according to any one of claims 1 to 9, wherein the method further comprises:
- selecting at least one image patch in each cluster of the plurality of clusters;
- displaying the selected image patches.

11. Method according to any one of claims 1 to 10, wherein the method further comprises creating an index for each cluster, said index pointing back in the database to at least one video image comprising an image patch of said cluster.

12. Method according to any one of claims 1 to 11, wherein the method further comprises associating a link between two clusters within the plurality of clusters.

13. Device configured for analyzing a database comprising a plurality of video images, **characterized in that** the device comprises at least one processor configured for:
- sampling each video image of at least a part of the plurality of video images of the database in order to get a plurality of image patches for said video image, each image patch being a portion of said video image;
- filtering said image patches based on at least one predetermined criterion in order to remove image patches having redundant visual content and to keep a limited group of visually non-similar image patches and/or visually non-similar image patches representative of said plurality of image patches; and
- clustering image patches of said limited group of image patches into a plurality of clusters according to a visual similarity criterion, each cluster including image patches including visually and/or semantically similar visual motifs.

14. Device according to claim 13, wherein the at least one processor is further configured for creating an index for each cluster, said index pointing back in the database to at least one video image comprising an image patch of said cluster.

15. Computer program product, **characterized in that** it comprises instructions of program code for executing steps of the method according to one of claims 1 to 12, when said program is executed on a computer.
